# EUROPÄISCHE PATENTSCHRIFT

(11) **EP 1 588 791 B1**
(45) Veröffentlichungstag und Bekanntmachung des Hinweises auf die Patenterteilung: **04.07.2007**
(21) Anmeldenummer: 05003981.7
(22) Anmeldetag: 24.02.2005
(51) Int. Cl.: B23D 31/00

(54) **Verfahren zum Bruchtrennen wieder zusammensetzbarer Bauteile**
Method for breaking parts which are to be rejoint
Méthode pour fracturer des pièces à être rejointes

(30) Priorität: 24.04.2004 DE 102004020063
(43) Veröffentlichungstag der Anmeldung: 26.10.2005
(73) Patentinhaber: MAN Nutzfahrzeuge Aktiengesellschaft, 80995 München (DE)
(72) Erfinder: Burkhardt, Wolfgang, 91522 Ansbach (DE)

(56) Entgegenhaltungen:
- EP-A- 0 491 574
- EP-A- 0 661 125
- EP-A- 0 985 479
- EP-A- 1 153 686
- US-A- 3 515 326
- US-A- 3 834 772
- US-B1- 6 644 529

## Beschreibung

Die Erfindung bezieht sich auf ein Verfahren gemäß dem Gattungsbegriff des Patentanspruches 1.

Beim Trennen von wieder zusammensetzbaren Bauteilen oder deren Vormaterialien hat sich in den Bereichen, in denen es auf eine hohe Fügegenauigkeit, verbunden mit einer rationellen Fertigung ankommt, das Bruchtrennen als bevorzugte Methode durchgesetzt, so z.B. im Brennkraftmaschinenbereich beim Abtrennen der Pleuellagerdeckel vom Pleuel oder der Kurbelwellenlagerdeckel vom Kurbelgehäuse.

Das Bruchtrennen erfolgt in unterschiedlichen Bearbeitungsstufen der Bauteile, immer nach dem gleichen verfahrenstechnischen Ablauf. Zunächst wird eine Kerbe in das der Bruchtrennung zu unterwerfende Teil eingebracht, wobei die Kerbe dem gewünschten Verlauf der Bruchlinie ganz oder teilweise entlang der Kontur des Teiles folgt. Das Einbringen der Kerbe kann auf unterschiedlichste Weise erfolgen, die Literatur gibt hierüber erschöpfend Auskunft. Die erzeugte Kerbe hat den Zweck, beim Aufbringen der den Bruch bewirkenden Kräfte, den Bruchverlauf zu initiieren. Das eigentliche Bruchtrennen erfolgt dann in der Weise, dass senkrecht zur gewünschten Bruchfläche eine Kraft aufgebracht wird, die das Teil an der gewünschten Stelle zerreißt. In der Praxis zeigt es sich jedoch, dass der tatsächliche Bruchverlauf sehr häufig vom gewünschten Bruchverlauf abweicht. Die Ursachen dafür sind vielfältig. Es kann am Material selbst liegen, spröde Gussmaterialien eignen sich besser zum Bruchtrennen als duktile Materialien, wie sie beispielsweise bei geschmiedeten Pleueln vorliegen. Neben dem Material selbst können Eigenspannungen, Verunreinigungen oder Inhomogenitäten des Grundwerkstoffes Ursache für einen unbefriedigenden Bruchverlauf sein.

Zur günstigen Beeinflussung des Bruches ist es z.B. aus der DE 100 22 884 bekannt, den Bruchbereich durch eine örtlich begrenzte Wärmebehandlung gegenüber dem übrigen Bauteil im Wege einer Gefügeumwandlung zu verspröden, was zu einem lokalen mehraxialen Spannungszustand führt. Dieses Verspröden lässt sich dabei auf unterschiedlichstem Wege erreichen. Beim verbreiteten Laserkerben, wie es beispielsweise in der DE 196 17 402 A1 beschrieben ist, wird entlang der gewünschten Bruchlinie das Material aufgeschmolzen und die Schmelze ausgeblasen oder verdampft, so dass sich eine durchgehende Kerbe oder eine Linie sich aneinanderreihender Sacklöcher ergibt. Die Randbereiche der Kerbe oder der Löcher verspröden unter Ausbildung entsprechender Gefügestrukturen, weil die Wärme sehr schnell von dem sehr kleinen aufgeschmolzenen Bereich in das übrige Bauteil abwandert. Die mit der Versprödung verbundenen mehrdimensionalen Spannungszustände können zu mikroskopischen Härterissen führen, die zwar erwünscht sind, aber ebenso wie die Spannungszustände in beliebigen Winkeln zur gewünschten Bruchlinie verlaufen und wie diese ein "Auswandern" der Bruchlinie verursachen, wenn der Bruch durch Aufbringen der Bruchtrennkraft initiiert wird.

Weiter ist es aus der EP 0 661 125 A1 bekannt, zur günstigen Beeinflussung des Bruches, zunächst eine Kraft in Richtung der später aufzubringenden Bruchtrennkraft auf das Bauteil aufzubringen, wobei diese Vorspannkraft unter der Streckgrenze des zu trennenden Bauteiles liegt. Dadurch lässt sich die für die eigentliche Bruchtrennung notwendige Kraft minimieren, was die Voraussetzung dafür schafft, dass ein möglichst steiler Anstiegsgradient der aufzubringenden eigentlichen Bruchtrennkraft erreichbar wird. Der steile Anstiegsgradient beeinflusst die Bruchinitiierung und den Bruchverlauf zwar positiv kann aber dadurch, dass die statische Vorspannung in relativ großen Bauteilbereichen wirksam ist, nicht verhindert, dass durch die vorstehend beschriebenen Ursachen die Bruchlinie in unerwünschter Weise auswandert.

Eine Möglichkeit das Auswandern der Bruchlinie zu verhindern ist in der EP 0 985 479 A1 aufgezeigt. Erreicht wird dies dadurch, dass über Keile eine Druckkraft auf das Bauteil das bruchgetrennt werden soll aufgebracht wird und zwar dort, wo der durch den Bruchtrennvorgang erzeugte Riss enden soll. Die Druckkraft erzeugt dabei eine Kerbwirkung auf die der Riss während des Bruchtrennvorganges zuläuft.

Weiter ist es aus der US 6 644 529 B1 bekannt, Kräfte in Form einer Schwingung im Bereich der Resonanzfrequenz des Bauteils mittels starrer Kontaktelemente, die jeweils die der Bruchtrennung zu unterwerfenden Bereiche des Bauteils umgreifen, auf das Bauteil im Bereich der Bruchtrennebene aufzubringen. Die Schwingungen im Bereich der Resonanzfrequenz des Bauteils führen je nach Schwingungsmode zu unterschiedlichsten Verformungen des Bauteils, dabei unterstützen bestimmte Schwingungsmode aufgrund der bei diesen auftretenden zur Bruchtrennkraft gleichgerichteten Kräfte den Bruchtrennvorgang, wenn die Bruchtrennkraft auf das Bauteil aufgebracht wird.

Ausgehend von diesem Stand der Technik ist es Aufgabe der Erfindung, ein Verfahren zum Bruchtrennen wieder zusammensetzbarer Bauteile oder deren Vormaterialien anzugeben, das einerseits das Abweichen der tatsächlichen Bruchlinie vom gewünschten Verlauf weitgehend verhindert und es andererseits erlaubt in Wirkungsrichtung der Bruchtrennkräfte eine Vorspannung auf das der Bruchtrennung zu unterwerfende Teil aufzubringen.

Gelöst wird die Aufgabe durch die kennzeichnenden Merkmale der Ansprüche 1 und 2, vorteilhafte Ausgestaltungen des erfindungsgemäßen Verfahrens sind in den abhängigen Ansprüchen gekennzeichnet.

Bei der Lösung der Aufgabe wurde davon ausgegangen, dass die den Bruch positiv beeinflussenden Anteile der Vorspannung nur diejenigen sind, die in der gewünschten Bruchfläche wirksam werden, die übrigen mit der konventionellen Erzeugung der Vorspannung einhergehenden Spannungszustände in dem der Bruchtrennung zu unterwerfenden Teil müssen zwar mit erzeugt werden, sind für die positive Beeinflussung des Bruchverlaufes aber wirkungslos. Es war demnach nach einer Möglichkeit zu suchen, eine Zugvorspannung zu erzeugen, die im wesentlichen nur an der gewünschten Bruchfläche, senkrecht zu dieser wirksam wird. Ausgehend von dieser Überlegung wurde gefunden, dass sich die gewünschte Zugspannung senkrecht zu der gewünschten Bruchfläche dadurch erzeugen lässt, dass auf das der Bruchtrennung zu unterwerfende Teil eine Kraft aufgebracht wird, die eine Druckspannung mit ihrem Maximum in der Ebene der gewünschten Bruchfläche zur Folge hat. Die gewünschte Zugspannung senkrecht zur Bruchebene ergibt sich durch die werkstoffabhängige Querkontraktion, die bei Stahl in einem Verhältnis von Querspannung zu Längsspannung von etwa 0,3 gegeben ist. In vorgestellten Fall bedeutet dies, den Werkstoff Stahl vorausgesetzt, dass die Druckspannung in der Bruchebene zur Zugspannung senkrecht zu dieser in einem Verhältnis von 1 : 0,3 steht. Die auf das Teil aufzubringende Kraft darf dabei, von geringfügigen Oberflächendeformationen abgesehen, das der Bruchtrennung zu unterwerfende Teil nicht plastisch verformen und kann eine statisch oder eine dynamisch wirkende Kraft sein.

Der Vorteil des erfindungsgemäßen Verfahrens besteht darin, dass das Maximum der so erzeugten Zugspannung in der gewünschten Bruchfläche liegt, was einerseits eine Kerbwirkung erzeugt und andererseits eine senkrecht zur gewünschten Bruchfläche wirkende Vorspannung zur Folge hat, die die zur eigentlichen Bruchtrennung notwendige Kraft reduziert, wodurch wiederum die Voraussetzungen für einen hohen Anstiegsgradienten der Bruchkraft geschaffen sind.

Nachdem, wie bereits erwähnt, die auf das der Bruchtrennung zu unterwerfende Teil aufzubringende Zugspannung im Ergebnis einer Kerbwirkung entspricht, kann bei geeigneten Materialien auf das Einbringen von Kerben und/oder das Erzeugen einer Kerbwirkung durch Gefügeumwandlung, ganz oder teilweise verzichtet werden. Handelt es sich hingegen um sehr zähe Materialien mit schlechten Bruchtrenneigenschaften, so lässt sich in Anwendung der vorstehend angesprochenen bekannten konventionellen Kerbmethoden die Grenze, innerhalb der Bruchtrennung überhaupt möglich ist, durch den zusätzlichen Einsatz des erfindungsgemäßen Verfahrens deutlich erweitern.

Die erfindungsgemäß aufzubringende Zugspannung kann durch Druckkräfte erzeugt werden, die in unterschiedlicher Weise am Teil angreifen, um die gewünschte Wirkung zu erzielen. So ist es möglich, die Druckkraft über einen oder mehrere scharfkantige Keile, die entlang zumindest eines Teils der gewünschten Bruchlinie am Teil angreifen, aufzubringen. Dabei kann das Druckgegenlager durch den Keilen gegenüberliegende gleichartige Keile oder auch glatte Anlageflächen gebildet sein. Die Wirkung der aufgebrachten Druckkraft ist umso günstiger, je größer der Teil der gewünschten Bruchlinie ist, der mit der Druckkraft beaufschlagt ist.

Weiter ist es in vorteilhafter Weise möglich, die Druckkraft über eine Scheranordnung auf das der Bruchtrennung zu unterwerfende Teil aufzubringen. Die Scheranordnung greift dabei so an dem Teil an, dass das Maximum der Druckspannung in der Ebene der gewünschten Bruchfläche liegt. Dabei kann die Scheranordnung durch einander gegenüberliegende Scherkanten, die entlang eines Teils der Umfangslinie am Teil anliegen, wirken.

Im Falle des Aufbringens einer dynamischen Druckkraft mit einer der vorstehend angesprochenen Anordnungen ist dies so zu bewerkstelligen, dass das Maximum der erzeugten Zugspannung im wesentlichen zeitgleich mit dem Maximum der eigentlichen Bruchtrennkraft erreicht wird.

Vorteilhafte Ausgestaltungen des erfindungsgemäßen Verfahrens sind nachfolgend unter Zuhilfenahme der Zeichnungen näher erläutert. Es zeigen:
- Fig. 1: eine Methode, die Druckkraft über Keile aufzubringen
- Fig. 2: eine Methode, die Druckkraft über eine Scheranordnung aufzubringen
- Fig. 3: eine Methode, die Druckkraft über Keile bei gleichzeitiger geringfügiger Oberflächenverformung aufzubringen.

Das Verfahren der Bruchtrennung wird im Folgenden an einem Probekörper erläutert, dies dient der Vereinfachung der Darstellung. Das erfindungsgemäße Verfahren lässt sich selbstverständlich auf alle Bauteile anwenden, die für eine Bruchtrennung geeignet sind. Ein bevorzugter Anwendungsbereich ist dabei das Bruchtrennen von Lageranordnungen, z.B. Pleuellagern oder Kurbelwellenlagem von Brennkraftmaschinen.

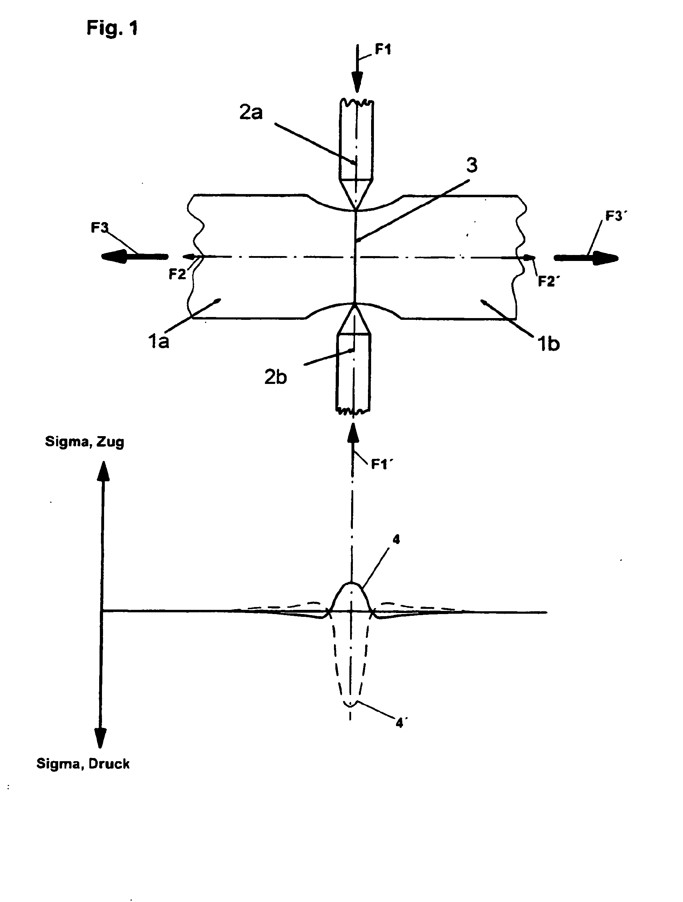

Figur 1 zeigt in Seitenansicht ein Bauteil 1, das der Bruchtrennung zu unterwerfen ist. Der Bruch soll dabei entlang der gewünschten Bruchlinie 3 erfolgen. Um dies zu erreichen, wird zunächst über zwei Keile 2a, 2b eine Druckkraft auf das Bauteil 1 ausgeübt. Die Keile 2a, 2b setzen dabei entweder punktförmig oder linienförmig mit einer scharfen Spitze oder Kante an der gewünschten Bruchlinie 3, also der Umfangslinie der gewünschten Bruchfläche an. Sie sind dabei aufeinander zu gerichtet an gegenüberliegenden Seiten des Bauteils 1 angeordnet, so dass das Maximum der erzeugten Druckspannung in der Ebene der gewünschten Bruchfläche liegt, was eine senkrecht dazu wirkende Zugspannung zur Folge hat. Dabei ist es vorteilhaft, wenn der Teil der gewünschten Bruchlinie, der mit den Keilen 2a, 2b beaufschlagt wird, gemessen an der gesamten Länge der gewünschten Bruchlinie 3 möglichst groß ist. Weiter ist es vorteilhaft, die Keile 2a, 2b dort an der Bruchlinie 3 angreifen zu lassen, wo aufgrund von konstruktiven Merkmalen ein Abweichen der tatsächlichen Bruchlinie von der gewünschten Bruchlinie 3 zu erwarten oder durch Versuche festgestellt ist. Das Aufbringen der Druckkräfte mittels der Keile 2a, 2b kann so erfolgen, dass beide Keile 2a, 2b über einen Antrieb (nicht dargestellt) mit gleicher Kraft aktiv auf das Bauteil einwirken. Es ist aber natürlich auch möglich, die Kraft über den Antrieb nur eines ersten Keils 2a aktiv aufzubringen, während der zweite Keil 2b als passives Widerlager dient. Ebenfalls denkbar ist es, den als Widerlager dienenden zweiten Keil 2b durch eine als Widerlager dienende Anlagefläche (nicht dargestellt) zu ersetzen, oder die Funktion des Widerlagers in eine Einspannung (nicht dargestellt) des Bauteils zu verlegen.

Für die nachfolgende Betrachtung der Kräfte- bzw. Spannungsverhältnisse am Bauteil 1 ist angenommen, dass über die beiden Keile 2a, 2b jeweils eine Kraft F₁ bzw. F₁' auf das Bauteil 1 aufgebracht wird. Die Kräfte F₁ und F₁' haben einen Druckspannungsverlauf 4' im Bauteil 1 zur Folge, der ebenfalls in Fig. 1 dargestellt ist. Das Maximum des Druckspannungsverlaufes 4' wird in der Ebene erreicht, in der die Kräfte F₁, F₁' wirken, also in der gewünschten Bruchfläche. Die über die Druckspannung erzeugte, senkrecht zu dieser wirkende Zugspannung folgt dem Zugspannungsverlauf 4 und stellt dabei einerseits eine Beanspruchung des Bauteils 1 dar, die der Wirkung einer Kerbe in Richtung der gewünschten Bruchfläche entspricht und andererseits eine Beanspruchung die in ihrer Wirkung einer Vorspannung des Bauteils 1 in senkrechter Richtung zur gewünschten Bruchfläche entspricht, wie sie von fiktiven Kräften F₂, F₂' verursacht würde, mit dem Unterschied, dass die fiktiven Kräfte F₂, F₂' diesen Spannungszustand im gesamten Bauteil 1 erzeugen würden und nicht nur in einem kleinen Bauteilbereich in unmittelbarer Umgebung der gewünschten Bruchfläche.

Der Vorgang des Bruchtrennens läuft bei der vorstehend beschriebenen Anordnung so ab, dass auf das der Bruchtrennung zu unterwerfende Bauteil 1 zunächst mittels der Keile 2a, 2b die Kräfte F₁, F₁' entlang eines Teils der Bruchlinie 3 aufgebracht werden. Unter diesem Spannungszustand werden sodann die eigentlichen Bruchtrennkräfte F₃, F₃', senkrecht zur gewünschten Bruchfläche auf das Bauteil 1 aufgebracht, die das Bauteil 1 entlang der Bruchlinie 3 in die Teile 1a, 1b zerreisen.

Durch den Spannungszustand im Bereich der gewünschten Bruchtrennfläche bilden sich die den Bruch initiierenden Startrisse so aus, dass sie dem Spannungsmaximum folgen, wodurch ein Auswandern der Bruchfläche in andere Bereiche des Bauteils 1 weitgehend verhindert werden kann. Der Spannungszustand des Bauteils 1 während des Bruchtrennvorganges reduziert darüber hinaus die zur Bruchtrennung notwendigen Kräfte, was, wie bereits ausgeführt, dazu genutzt werden kann, die Anstiegsgeschwindigkeit der Kräfte F₃, F₃' zu erhöhen. Abweichend von dem vorstehend beschriebenen Ablauf können die Kräfte F₁, F₁' auch in einem dynamischen Vorgang, während des Bruchtrennvorganges, also zeitgleich mit den Bruchtrennkräfte F₃, F₃' auf das Bauteil 1 aufgebracht werden. Dabei ist zu beachten, dass die Kräfte F₁, F₁' und die Bruchtrennkräfte F₃, F₃' im wesentlichen zeitgleich das die Bruchtrennung bewirkende Maximum erreichen.

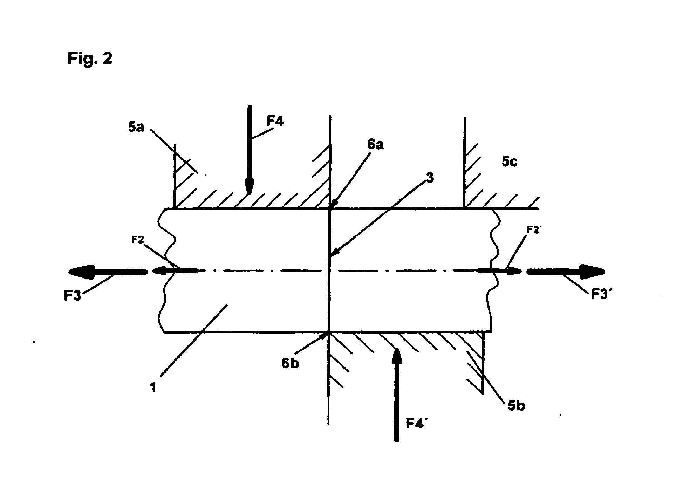

Eine andere Möglichkeit, im Bereich der Bruchfläche eine Druckspannung auf das der Bruchtrennung zu unterwerfende Bauteil aufzubringen, ist in Fig. 2 dargestellt. Eine Scheranordnung, bestehend aus zwei Scherbacken 5a, 5b und einem Widerlager 5c, greift mit ihren Scherkanten 6a, 6b entlang eines Teils der Bruchlinie 3, die auch hier der Umfangslinie der gewünschten Bruchfläche entspricht, am Bauteil 1 an. Auf die Scherbacken 5a, 5b wirken Kräfte F₄, F₄' die im Bauteil 1 eine Druckspannung erzeugen, die ihr Maximum im Bereich der gewünschten Bruchfläche hat. Die über die Druckspannung erzeugte Zugspannung hat die gleichen Wirkungen, wie dies in Verbindung mit Fig. 1 beschreiben ist, einerseits die Kerbwirkung in der Bruchebene andererseits die Vorspannung senkrecht zur Bruchebene. Auch der Bruchtrennvorgang selbst unterscheidet sich nicht von dem in Verbindung mit Fig. 1 geschilderten, so dass auf diesen Beschreibungsteile verwiesen werden kann. Auch in diesem Fall ist ein statisches oder ein dynamisches aufbringen der Scherkräfte F₄, F₄' möglich, analog zu dem was bereits zu Fig. 1 dazu ausgeführt ist.

Ergänzend zu den vorstehend beschriebenen Verfahren der Bruchtrennung kann natürlich auch, in Verbindung mit diesen, die an sich bekannte Vorgehensweise, entlang der gewünschten Bruchlinie Kerben vorzusehen, zum Einsatz kommen. Die Kerben werden dabei auf bekanntem Wege, z.B. durch aufschmelzen der Oberfläche mittels Laserstrahl, durch mechanisches Ritzen, durch Gefügeumwandlung usw. in dem der Bruchtrennung zu unterwerfenden Bauteil erzeugt und unterstützen die Bruchtrennung insbesondere auch zäher Materialien, wie z.B. duktiler Strähle, wie sie beispielsweise bei geschmiedeten Pleueln verwendet werden.

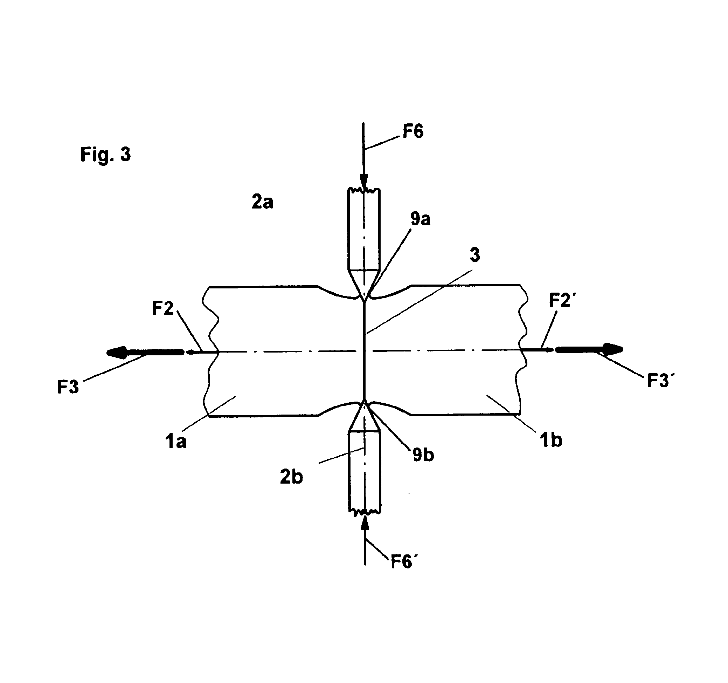

Das Erzeugen der vorstehend angesprochenen Kerben lässt sich auch mit der in Verbindung mit Fig. 1 beschriebenen Anordnung vorteilhaft dadurch erreichen, dass beim Aufbringen der Druckkräfte F₁, F₁' diese so bemessen sind, dass, wie in Fig. 3 dargestellt, die Schneiden 9a, 9b der Keile 2a, 2b in die Oberfläche des des Bauteiles 1 eindringen, so dass neben dem gewünschten Spannungszustand auch eine die Rissauslösung begünstigende Kerbe entsteht.

Wie bereits erwähnt, kommt den vorstehend beschriebenen Beispielen der Bruchtrennung mittels des erfindungsgemäßen Verfahrens nur Beispielcharakter zu.

## Patentansprüche

1. Verfahren zum Bruchtrennen wieder zusammensetzbarer Bauteile oder deren Vormaterialien, wobei das der Bruchtrennung zu unterwerfende Bauteil durch das Aufbringen einer Bruchtrennkraft senkrecht zur gewünschten Bruchtrennfläche, bruchgetrennt wird, wobei vor dem Aufbringen der Bruchtrennkraft (F₃, F₃') eine Druckkraft (F₁ bis F₆') aufgebracht wird, die eine Zugspannung zur Folge hat die ihr Maximum in der Ebene der gewünschten Bruchtrennfläche senkrecht zu dieser hat und so bemessen ist, dass das durch sie erzeugte Spannungsniveau noch unterhalb der Streckgrenze des Werkstoffes des Bauteiles (1) liegt, **dadurch gekennzeichnet, dass** die Druckkraft (F₁ bis F₆') mittels Keilen (2a, 2b), oder Scherbacken (6a, 6b) auf das der Bruchtrennung zu unterwerfende Bauteil (1) aufgebracht wird, die punktförmig oder linienförmig mit einer scharfen Spitze oder Kante an der Umfangslinie der gewünschten Bruchfläche jeweils aufeinander zu gerichtet an gegenüberliegenden Seiten der gewünschten Bruchfläche gleichzeitig angreifen und wobei die Druckkraft (F₁ bis F₆') im Augenblick des Aufbringens der Bruchtrennkraft (F₃, F₃') noch am Bauteil (1) ansteht.

2. Verfahren zum Bruchtrennen gemäß Anspruch 1, **dadurch gekennzeichnet, dass** in das der Bruchtrennung zu unterwerfende Bauteil zunächst entlang zumindest eines Teils der gewünschten Bruchlinie eine Kerbwirkung durch mechanische und/oder gefügeverändernde Einwirkung auf das Bauteil in dieses eingebracht wird und das Bauteil sodann bruchgetrennt wird.

3. Verfahren zum Bruchtrennen gemäß einem der vorhergehenden Ansprüche, **dadurch gekennzeichnet, dass** der Teil der gewünschten Bruchlinie, der mit den Keilen 2a, 2b oder Scherbacken 6a, 6b beaufschlagt wird, gemessen an der gesamten Länge der gewünschten Bruchlinie 3 möglichst groß ist.

4. Verfahren zum Bruchtrennen gemäß einem der vorhergehenden Ansprüche, **dadurch gekennzeichnet, dass** die Druckkraft (F₁ bis F₆') mittels einer statischen Druckbelastung auf das der Bruchtrennung zu unterwerfende Bauteil (1) aufgebracht wird, wobei die Druckkraft (F₁ bis F₆') in der Ebene der Bruchtrennfläche liegend und/oder parallel zu dieser am Bauteil (1) angreift.

5. Verfahren zum Bruchtrennen gemäß einem der vorhergehenden Ansprüche, **dadurch gekennzeichnet, dass** die Druckkraft (F₁ bis F₆') mittels einer dynamischen Druckbelastung auf das der Bruchtrennung zu unterwerfende Bauteil (1) aufgebracht wird, wobei die Druckkraft (F₁ bis F₆') in der Ebene der Bruchtrennfläche liegend und/oder parallel zu dieser am Bauteil (1) angreift und ihr Maximum im wesentlichen zeitgleich mit dem Maximum der Bruchtrennkraft (F₃, F₃') erreicht.

6. Verfahren zum Bruchtrennen gemäß einem der vorhergehenden Ansprüche, **dadurch gekennzeichnet, dass** eine erste Anlagefläche der Scheranordnung (5a, 5b, 5c) mit ihrer Scherkante (6a) entlang eines Teils der Umfangslinie der gewünschten Bruchfläche anliegend, sich in Richtung des ersten Endes des der Bruchtrennung zu unterwerfenden Bauteils (1) erstreckend am Bauteil (1) angreift und dieser ersten Anlagefläche gegenüberliegend eine zweite Anlagefläche der Scheranordnung (5a, 5b, 5c) mit ihrer Scherkante (6b) entlang eines Teils der Umfangslinie der gewünschten Bruchfläche anliegend, sich in Richtung des zweiten Endes des Bauteils (1) erstreckend am Bauteil (1) angreift, und das Bauteil (1) gegen Verkanten gesichert ist, so dass die Scheranordnung (5a, 5b, 5c) eine in der Ebene der gewünschten Bruchfläche liegende Druckspannung und mit dieser eine senkrecht dazu wirkende Zugspannung erzeugt.

7. Verfahren zum Bruchtrennen gemäß einem der vorhergehenden Ansprüche, **dadurch gekennzeichnet, dass** die Druckkraft (F₁, F₁') so bemessen ist, dass wenigstens einer der scharfkantigen Keile (2a, 2b) in die Oberfläche des der Bruchtrennung zu unterwerfenden Bauteils (1) eindringt.

## Claims

1. A method of breaking apart rejoinable parts or their starting materials, wherein the part to be broken is broken by the application of a breaking force perpendicularly to the desired breaking surface, wherein, before application of the breaking force (F₃, F₃'), a compressive force (F₁ to F₆') is applied which produces a tensile stress which has its maximum in the plane of the desired breaking surface perpendicularly thereto and is proportioned so that the stress level generated by it still lies below the elastic limit of the material of the part (1), **characterised in that** the compressive force (F₁ to F₆') is applied to the part (1) to be broken by means of wedges (2a, 2b) or shearing jaws (6a, 6b) which simultaneously act upon the circumference of the desired breaking surface in a pointwise or linear manner with a sharp tip or edge, in each case facing one another on opposite sides of the desired breaking surface, and wherein the part (1) is still under the compressive force (F₁ to F₆') at the moment of application of the breaking force (F₃, F₃').

2. A breaking method according to claim 1, **characterised in that** a notch effect is produced in the part to be broken, initially along at least part of the desired breaking line, by mechanical action on the part and/or by action effecting a structural change therein and the part is then broken.

3. A breaking method according to either one of the preceding claims, **characterised in that** the part of the desired breaking line that is acted upon by the wedges (2a, 2b) or shearing jaws (6a, 6b) is as great as possible, measured along the whole length of the desired breaking line (3).

4. A breaking method according to any one of the preceding claims, **characterised in that** the compressive force (F₁ to F₆') is applied to the part (1) to be broken by means of static compressive loading, wherein the compressive force (F₁ to F₆') is applied to the part (1) in the plane of the breaking surface and/or parallel thereto.

5. A breaking method according to any one of the preceding claims, **characterised in that** the compressive force (F₁ to F₆') is applied to the part (1) to be broken by means of dynamic compressive loading, wherein the compressive force (F₁ to F₆') is applied to the part (1) in the plane of the breaking surface and / or parallel thereto and reaches its maximum substantially at the same time as the maximum of the breaking force (F₃, F₃').

6. A breaking method according to any one of the preceding claims, **characterised in that** a first contact surface of the shearing arrangement (5a, 5b, 5c) has a shearing edge (6a) which acts on the part (1) and lies along part of the circumference of the desired breaking surface, the first contact surface extending in the direction of the first end of the part (1) to be broken, and, opposite this first contact surface, a second contact surface of the shearing arrangement (5a, 5b, 5c) has a shearing edge (6b) which acts on the part (1) and lies along part of the circumference of the desired breaking surface, the second contact surface extending in the direction of the second end of the part (1), and the part (1) is secured against tilting so that the shearing arrangement (5a, 5b, 5c) generates a compressive stress lying in the plane of the desired breaking surface together with a tensile stress acting perpendicularly thereto.

7. A breaking method according to any one of the preceding claims, **characterised in that** the compressive force (F₁, F₁') is proportioned so that at least one of the sharp-edged wedges (2a, 2b) penetrates the surface of the part (1) to be broken.

## Revendications

1. Procédé pour séparer par fracture des pièces destinées à être réassemblées ou leur matière brute, la pièce à séparer par fracture étant séparée par l'application d'une force de séparation par fracture, perpendiculairement à la surface de séparation souhaitée, selon lequel, avant l'application de la force de séparation par fracture (F₃, F₃'), on applique une force de compression (F₁ à F₆') provoquant une tension de traction dont le maximum dans le plan de la surface de séparation par fracture, perpendiculairement à celle-ci et est dimensionnée de sorte que comme le niveau de tension obtenu reste encore en dessous de la limite d'étirement du matériau de la pièce de construction (1),
**caractérisé en ce que**
la force de compression (F₁ à F₆') est appliquée au moyens de coins (2a, 2b) ou de mors de cisaille (6a, 6b) sur la pièce de construction (1) pour effectuer une séparation par fracture, qui viennent en prise simultanément ponctuellement ou en forme de ligne avec un pointe aiguë ou une arête, contre la ligne périphérique de la surface de fracture souhaitée, dirigée à chaque fois l'un vers l'autre sur les côtés opposés de la surface de fracture souhaitée, et la force de compression (F₁ à F₆') étant toujours appliquée à la pièce de construction (1) au moment de l'application de la force de séparation par fracture (F₃, F₃').

2. Procédé de séparation par fracture selon la revendication 1,
**caractérisé en ce que**
on réalise dans la pièce de construction à séparer par fracture au moins le long d'une partie de la ligne de fracture souhaitée un effet de coin par action mécanique et/ou modification de réseau de la pièce de construction et limite la pièce de construction est séparée par fracture.

3. Procédé de séparation par fracture selon la revendication 1,
**caractérisé en ce que**
la partie de la ligne de fracture souhaitée qui est chargée à l'aide des coins (2a, 2b) ou des mors de cisaille (6a, 6b) est la plus grande possible par rapport à la mesure de la longueur totale de la ligne de fracture (3).

4. Procédé de séparation par fracture selon l'une des revendications précédentes,
**caractérisé en ce que**
la force de compression (F₁ à F₆') est appliquée sur la pièce de construction (1) au moyen d'une charge en compression statique sur la pièce de construction à séparer, la force de compression (F₁ à F₆')attaquant la pièce de construction (1) dans le plan de la surface de séparation par fracture et/ou parallèles à celui-ci.

5. Procédé de séparation par fracture selon l'une des revendications précédentes,
**caractérisé en ce que**
la force de compression (F₁ à F₆') est appliquée sur la pièce de construction à séparer par fracture au moyen d'une charge de pression dynamique, la force de pression (F₁ à F₆') venant en prise dans le plan de la séparation par fracture et/ou parallèlement à celui-ci, de la pièce de construction (1) et son maximum est obtenu essentiellement en même temps que le maximum de la force de séparation par fracture (F₃, F₃').

6. Procédé de séparation par fracture selon l'une des revendications précédentes,
**caractérisé en ce qu'**
une première surface d'appui du dispositif de cisailles (5a, 5b, 5c) s'applique avec son arête de cisaille (6a) le long d'une partie de la ligne périphérique de la surface de fracture souhaitée venant en prise dans la direction de la première extrémité de la pièce de construction (1) à séparer par fracture et du côté opposé de cette première surface d'appui vient en prise d'une seconde surface d'appui du dispositif de cisailles (5a, 5b, 5c) avec son arête de cisailles (6b) le long d'une partie de la ligne périphérique de la surface de fracture souhaitée en direction de la seconde extrémité de la pièce de construction (1) sur la pièce de construction (1) et la pièce de construction (1) est bloquée contre le coincement de sorte que le dispositif de cisailles (5a, 5b, 5c) permet d'obtenir une tension de compression dans le plan de la ligne de fracture souhaitée et générer avec celle-ci une tension de traction agissant perpendiculairement à celle-ci.

7. Procédé de séparation par fracture selon l'une des revendications précédentes,
**caractérisé en ce que**
la force de la compression (F₁, F₁') est dimensionnée de sorte qu'au moins un des coins à arête vive (2a, 2b) s'insère dans la surface supérieure de la pièce de construction (1) à séparer par fracture.
